(19) **Europäisches Patentamt**

**European Patent Office**

**Office européen des brevets**

(11) **EP 1 095 697 B1**

(12) **EUROPEAN PATENT SPECIFICATION**

(45) Date of publication and mention
of the grant of the patent:
**07.04.2004 Bulletin 2004/15**

(51) Int Cl.7: **B01J 8/04**, B01J 8/22,
C10G 2/00

(21) Application number: **00123037.4**

(22) Date of filing: **24.10.2000**

(54) **Horizontal modular reactor**

Aus Modulen bestehender horizontaler Reaktor

Réacteur modulaire horizontal

(84) Designated Contracting States:
**AT BE CH CY DE DK ES FI FR GB GR IE IT LI LU
MC NL PT SE**

(30) Priority: **28.10.1999 IT MI992245**

(43) Date of publication of application:
**02.05.2001 Bulletin 2001/18**

(73) Proprietors:
• **ENI S.p.A.
00144 Roma (IT)**
• **Institut Français du Pétrole
92852 Rueil-Malmaison Cedex (FR)**
• **EniTecnologie S.p.A.
S. Donato Milanese (Milano) (IT)**

(72) Inventors:
• **Clerici, Gabriele Carlo Ettore
Milano (IT)**
• **Belmonte, Giuseppe
Torino (IT)**

(74) Representative: **De Gregori, Antonella et al
Ing. Barzano & Zanardo Milano S.p.A.
Via Borgonuovo 10
20121 Milano (IT)**

(56) References cited:
**WO-A-95/24961** **WO-A-98/04342**
**DE-A- 2 357 200**

EP 1 095 697 B1

**Description**

The present invention relates to a horizontal modular reactor.

More specifically, the present invention relates to a horizontal modular reactor for reactions which develop in triphasic systems where a gas phase bubbles in a suspension of a solid in a liquid.

Even more specifically, the present invention relates to a horizontal modular reactor for the Fischer Tropsch synthesis which is carried out at temperatures ranging from 150 to 400°C and at a pressure of 0.5-20 MPa.

As is known, in the Fischer Tropsch reaction, the gas phase essentially consists of a mixture of hydrogen and carbon monoxide, with a molar ratio $H_2/CO$ varying from 1 to 3, the dispersing liquid phase represents the reaction product, i.e. substantially linear hydrocarbons with a high number of carbon atoms, and the solid phase is represented by the catalyst.

The exothermicity of the Fischer Tropsch reaction (35-40 kcal/mol) makes an accurate running of the reaction body indispensable, in order to obtain, together with an optimum conversion of the reagents, a continuous temperature control to avoid local hot spots responsible for the deterioration of the catalytic system.

Published European patent application 450.860 describes a method for running a reactor for reactions which develop in triphasic systems, such as the Fischer Tropsch reaction. In particular, the method comprises the use of a vertical column inside of which the solid catalyst particles are maintained in a fluidized state, inside the liquid phase, by bubbles of gas fed to the base of the reactor. To obtain optimum results, with respect to both conversion of the reagents and thermal control of the reaction, the gas feeding is recommended to be such that its average rate inside the reactor guarantees a "plug flow" type behaviour for the whole height of the column. This result can be reached if the average gas rate $U_g$ corresponds, among other things, to the equation:

$$U_g \geq 0.2 \ D/H$$

wherein D represents the dispersion coefficient of the catalyst particles in the liquid phase and H represents the height of the bubbled liquid.

The choice of using a vertical column as reactor, however, creates operating difficulties. As the columns have a height of over 10-25 meters, with diameters of 1,5-8.0 m and over, their installation and ordinary and extraordinary maintenance are complicated. In order to overcome these drawbacks, the Applicants have now found a reactor for reactions which develop in triphasic systems, alternative to those used at present in this field.

The present invention therefore relates to a horizontal modular reactor for reactions which develop in triphasic systems which comprises:

a) a horizontal cylindrical body subdivided into at least two modules, by at least one vertical baffle;

b) at least one heat exchanger in at least one module;

c) a gas distributor for each module, situated below the heat exchanger and positioned in the lower zone of the module;

d) a pair of outlets for each module for discharging the gas and the reaction liquid.

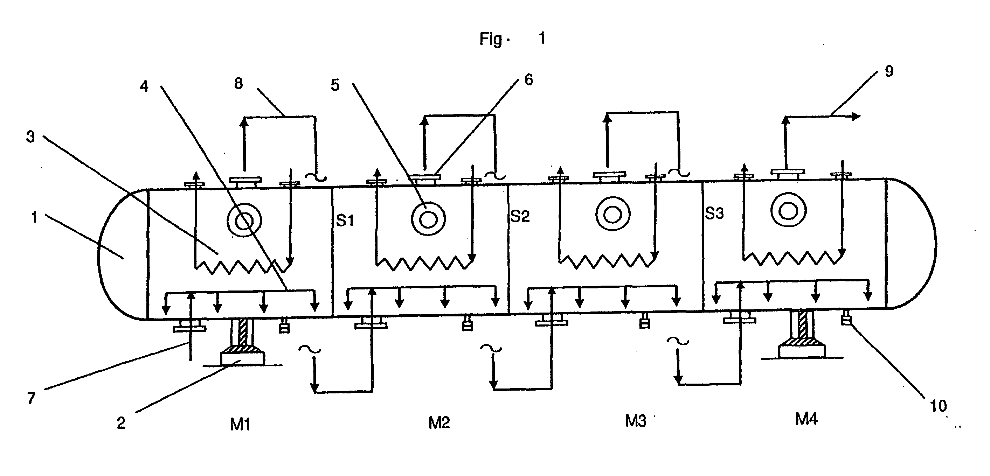

The horizontal modular reactor, object of the present invention can be more clearly understood by referring to the drawing of the enclosed figure 1 which represents an illustrative but non-limiting embodiment.

With reference to figure 1, the present reactor comprises the cylindrical body (1) resting horizontally to the ground by means of supports (2); modules or stages $M_1$-$M_4$, obtained by dividing the volume of the cylindrical body (1) by means of the dividing baffles $S_1$-$S_3$; heat exchangers (3), coaxial or non-coaxial to the cylindrical structure and independent, or not, of each other. Each heat exchanger preferably consists of a tube bundle or a coil or other heat removal systems such as, for example, exchanger plates suitable for operating in suspensions; gas distributors (4), positioned below the exchangers; the pair of outlets (5) and (6), which can be situated in the upper part of each module, for discharging the liquid produced and gases, respectively.

A significant peculiarity of the present invention is that placement of baffing $S_1$, $S_2$ and $S_3$ enables to modify the geometry of the modules. For instance, it may be useful to maintain differents residence times through the reactor. Moreover, each modules can operate with differents catalyst concentration and/or composition in order to enhance the reactor performances.

The functioning of the horizontal modular reactor of the present invention is evident from an examination of the enclosed figure 1. The cylindrical body, which can consist of a steel tube or of single subsections having a length ranging from 1 to 30 m, preferably from 10 to 20m, and a diameter ranging from 0.3 to 9 m, preferably from 1 to 6 m, in the case of industrial plants, i.e. a length ranging from 0.3 to 2 meters, in the case of a pilot and/or laboratory plant, it is subdivided into four modules by separation baffles $S_1$-$S_3$.

Under regime conditions, each module is occupied by a gas phase a suspension consisting of liquid reaction products and particles of catalyst.

The catalyst is maintained in a state of continuous stirring by the bubbles of reaction gas fed by means of the distributors (4). These distributors can consist of various perforated tubes arranged, for example, coaxially to the reactor, at a certain distance from the walls and, mainly in the lower section or of other devices suitable for effectively distributing the reagent gas in the suspension.

In particular, the fresh reaction gas is fed to the first module by means of line (7), it bubbles through the suspension and is discharged from the first module by means of line (8) together with the gaseous reaction products. The gaseous stream discharged from the top of the first module is fed to the second module, by means of the corresponding gas distributor. The gas is discharged from the top of the second module and is fed to the third module and so on. According to an alternative method of running the reactor of the present invention, it is possible to feed additional fresh gas directly to the single modules alone or mixed with the stream of partially reacted gas, already introduced by means of line (7). It is also possible, between one step and another, to separate the water and hydrocarbon compounds produced.

At the end of the modules, the non-reacted gas and the gaseous reaction products are discharged from the cylindrical body by means of (9) and treated in equipment not illustrated in the figure. The average temperature inside the suspension is controlled by means of the thermocouples situated in the appropriate gauges (10). Any possible reaction heat is removed by means of heat exchangers (3) which are therefore immersed in the suspension contained in the reactor. This heat can also be partially removed by means of auxiliary exchangers situated outside the reaction container.

The liquid produced in each module, owing to the gas reaction, is continuously discharged from the outlets (5). As this is a suspension, the liquid produced must be filtered to recover the catalyst which is recycled. This liquid can be separated immediately inside the reactor by means of suitable filtering devices such as filter cartridges, hydrocyclones, etc. or externally by means of filters, hydrocyclones, decanters, etc.

The concentration of catalyst present in each module can be kept practically constant inside the reactor or it can vary conveniently from module to module starting, for example, from a smaller concentration, at the initial section, to a greater concentration in the end section (where there is a lower partial pressure of:the reagents). In addition, the catalyst composition can be tuned in each module to optimise both products slates and operability. Analogously, the temperature profile along the horizontal axis of the reactor can be kept constant or varied by controlling the flow-rate of the cooling fluid circulating in the heat exchangers present inside and, optionally, outside the reactor.

In addition, by means of suitable lines equipped with appropriate valves, it is possible, in the case of malfunctioning of the single sections, to exclude one or more of the modules without causing the shut-down of the synthesis reactor, with obvious operating advantages.

The horizontal modular reactor of the present invention is suitable, in particular, for use in the Fischer Tropsch synthesis. In general, the Fischer Tropsch technology is based on chemical reactions which take place in triphasic systems where a gas phase is bubbled into a suspension of a solid in a liquid.

The gas phase consists of synthesis gas, a mixture of hydrogen and carbon monoxide with a molar ratio $H_2/CO$ ranging from 1 to 3, the dispersing liquid phase represents the reaction product, i.e. linear hydrocarbons generally with a high number of carbon atoms, and the solid phase is represented by the catalyst.

The synthesis gas preferably comes from steam-reforming or the partial oxidation of natural gas, on the basis of reactions described in the patent U.S. 5,645,613. Alternatively, the synthesis gas can come from other production techniques such as, for example, autothermal reforming or the high temperature gasification of carbon with water vapor, as described in "Catalysis Science and Technology" Vol. 1, Springe-Verlag, New York, 1981.

Two phases are substantially produced by the Fischer Tropsch reaction, a lighter one, in vapor phase, essentially consisting of light hydrocarbons, steam, inert products, etc. which is discharged together with the non-reacted gas, the other, heavier, essentially consisting of paraffinic waxes, liquid at the reaction temperature, comprising mixtures of saturated, linear hydrocarbons with a high number of carbon atoms. These are generally hydrocarbon mixtures which have a boiling point of over 150°C.

The Fischer Tropsch reaction is carried out at temperatures ranging from 150 to 400°C, preferably from 200 to 300°C, maintaining a pressure ranging from 0.5 to 20 MPa inside the reactor. More significant details on the Fischer Tropsch reaction are provided in "Catalysis Science and Technology" mentioned above.

Finally, inside the reactor, suspended in the hydrocarbon phase, is the catalyst.

Any catalyst capable of being active in the Fischer Tropsch reaction can be used in combination with the reactor of the present invention. The preferred catalyst is based on cobalt, in metal form or in the form of an oxide or (in)organic salt, dispersed on a solid support consisting of at least one oxide selected from one or more of the following elements: Si, Ti, Al, Zn, Mg. Preferred supports are silica, alumina or titania.

In the catalyst, the cobalt is present in a quantity ranging from 1 to 50% by weight, generally from 5 to 35%, with respect to the total weight.

The catalyst used in combination with the reactor of the present invention can comprise other additional elements. For example it can comprise, with respect to the total, from 0.05 to 5% by weight, preferably from 0.1 to 3% , of at least a third element selected from those belonging to Group IIIB. Catalysts of this type are known in literature and described, together with their preparation, in published European patent application 756,895.

Further examples of catalysts are again based on cobalt but containing tantalum as promoter in quantities of 0.05-5% by weight, with respect to the total, preferably 0.1-3%. These catalysts are prepared by first depositing a cobalt salt onto the inert support (silica or alumina), for example, by means of the dry impregnation technique, followed by a calcination step and, optionally, a reduction and passivation step of the calcined product.

A compound of tantalum (particularly tantalum alcoholates) is deposited on the catalytic precursor thus obtained, by means of the wet impregnation technique followed by calcination and, optionally, reduction and passivation.

The catalyst, whatever its chemical composition be, is used in the form of a finely subdivided powder with an average particle diameter ranging from 10 to 700 micrometers.

An illustrative but non-limiting example is provided below for a better understanding of the present invention and for its embodiment.

EXAMPLE

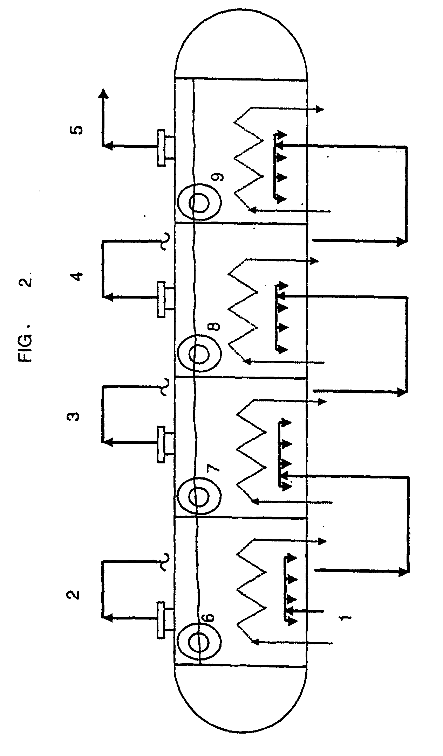

Reference is made to the reactor of figure 2 enclosed, consisting of a horizontal cylinder having a length of about 30 cm and a diameter of 11 cm subdivided into four modules.

The modules of the reactor are charged with the catalyst having an average particle size ranging from 20 to 100 μm consisting of an alumina support having a surface area of 175 $m_2$/g on which 14% by weight of cobalt and 0.5% by weight of tantalum are distributed. After start-up and under steady conditions, a stream of synthesis gas with a molar ratio $H_2$/CO equal to 2, is fed to the first module. The reaction is carried out at 230°C and at a pressure of 3 MPa.

The results and operating streams are indicated in tables 1-3.

TABLE 1

| MULTISTEP HORIZONTAL REACTOR | | |
|---|---|---|
| Total mass of catalyst | 3200 | g |
| Total CO conversion | 0.9 | |
| Operating pressure | 3 | MPa |
| Operating temperature | 230 | °C |
| CO feeding flow-rate | 808 | Nl/h |
| $H_2$ feeding flow-rate | 1617 | Nl/h |
| Total feeding flow-rate | 2425 | Nl/h |
| Total feeding flow-rate | 1154 | g/h |
| Number of steps (CSTR) | 4 | |
| Selectivity to $CH_4$ | 10 | %C |
| Mass of catalyst per stage | 800 | g |
| Molar fraction vapour products according to Anderson Schultz-Flory $\alpha$ $C_2^+$ | 0.9 | |

TABLE 2

| Components | STREAM | | | | | | | | |
|---|---|---|---|---|---|---|---|---|---|
| | 1 | 2 | 3 | 4 | 5 | 6 | 7 | 8 | 9 |
| $CH_4$ | | 16 | 30 | 43 | 52 | | | | |
| $C_2$-$C_5$ | | 14 | 27 | 39 | 47 | | | | |
| $C_6$-$C_{15}$ | | 51 | 98 | 139 | 169 | | | | |
| $C_{15}^+$ | | | | | | 56 | 52 | 45 | 33 |
| CO | 1010 | 737 | 484 | 262 | 101 | | | | |
| $H_2$ | 144 | 105 | 69 | 38 | 15 | | | | |

## EP 1 095 697 B1

TABLE 2  (continued)

| Components | 1 | 2 | 3 | 4 | 5 | 6 | 7 | 8 | 9 |
|---|---|---|---|---|---|---|---|---|---|
| | | | | STREAM | | | | | |
| $H_2O$ | | 175 | 338 | 480 | 584 | | | | |
| Total [g/h] | 1154 | 1098 | 1046 | 1001 | 968 | 56 | 52 | 45 | 33 |

TABLE 3

| LAST REACTION STEP | | |
|---|---|---|
| Final flow-rate of CO: | 81 | Nl/h |
| Final flow-rate of $H_2$ | 162 | Nl/h |
| Final flow-rate of $H_2O$ | 727 | Nl/h |
| **Total in volume:** | 970 | Nl/h |
| **Total in mass:** | **700** | **g/h** |
| Productivity to $C_1^+$ | **142** | **g/kgcat/h** |
| **Total flow-rate** hydrocarbons | **454** | **g/h** |
| **Total flow-rate waxes:** | **186** | **g/h** |

**Claims**

**1.** A horizontal modular reactor for reactions which develop in triphasic systems which comprises:

a) a horizontal cylindrical body subdivided into at least two modules by at least one vertical baffle;
b) at least one heat exchanger in at least one module;
c) a gas distributor for each module, situated below the heat exchanger and positioned in the lower zone of the module;
d) a pair of outlets for each module for the discharge of the gas and the reaction liquid.

**2.** The reactor of Claim 1 further comprising a plurality of baffles attached to the cylindrical body in order to:

a) enable different volumes of the modules;
b) realise different catalyst concentrations in the modules;
c) provide different catalyst compositions in the modules.

**Patentansprüche**

**1.** Horizontaler, modularer Reaktor für Reaktionen, bei denen ein Dreiphasensystem gebildet wird, wobei der Reaktor folgendes aufweist:

a) einen horizontalen zylinderförmigen Körper, der durch zumindest eine vertikale Trennwand in zumindest zwei Module unterteilt ist.
b) zumindest einen Wärmetauscher in zumindest einem Modul;
c) einen Gasverteiler für jedes Modul, der unter dem Wärmetauscher angeordnet und in dem unterem Bereich des Moduls positioniert ist;
d) ein Paar von Auslässen für jedes Modul für das Auslassen von Gas und der Reaktionsflüssigkeit.

**2.** Reaktor gemäß Anspruch 1, der weiterhin folgendes aufweist:

eine Mehrzahl von Trennwänden, die mit dem zylinderförmigen Körper verbunden sind, um:

a) unterschiedliche Volumen hinsichtlich der Module zu ermöglichen;
b) unterschiedliche Katalysatorkonzentrationen in den Modulen zu verwirklichen;

c) unterschiedliche Katalysatorzusammensetzungen in den Modulen bereit zu stellen.

**Revendications**

1. Réacteur modulaire horizontal pour des réactions qui se développent dans des systèmes triphasés, qui comprend :

    a) un corps cylindrique horizontal subdivisé en au moins deux modules par au moins une chicane verticale ;
    b) au moins un échangeur de chaleur dans au moins un module ;
    c) un distributeur de gaz pour chaque module, situé au-dessous de l'échangeur de chaleur et positionné dans la zone inférieure du module ;
    d) une paire de sorties pour chaque module pour la décharge du gaz et du liquide réactionnel.

2. Réacteur selon la revendication 1, comprenant de plus une pluralité de chicanes fixées sur le corps cylindrique afin de :

    a) permettre différents volumes de modules ;
    b) réaliser différentes concentrations de catalyseur dans les modules ;
    c) fournir différentes compositions de catalyseur dans les modules.

Fig. 1

FIG. 2